# EUROPEAN PATENT APPLICATION

(11) **EP 3 246 275 A1**
(43) Date of publication of application: **22.11.2017**
(21) Application number: 16169864.2
(22) Date of filing: 17.05.2016
(51) Int. Cl.: B65G 47/14

(54) **VIBRATORY BOWL FOR CONTINUOUSLY SUPPLYING SMALL PIECES**

(71) Applicant: Intec Industrias Tecnicas S.L., 08911 Badalona (ES)
(72) Inventor: CODINA CASAS, Francisco Javier, 08911 Badalona (ES)
(74) Representative: Curell Suñol S.L.P.

(57) **Abstract**

The invention relates to a vibratory bowl (1) for continuously supplying small pieces, comprising a conical wall (2) and a bottom (3) demarcating a concavity intended for containing the pieces. A track (4) with a conical spiral path is formed in the conical wall (2), along which the pieces move forward to a discriminator (5) as a result of vibration of the bowl (1). In a wall (6) of the track (4), intended for being in contact with the pieces moving forward along said track, there is integrally arranged at least one anti-slip body (7) which is different from the body making up the bowl (1) and which extends along at least one segment of the track (4). The anti-slip body (7) has a coefficient of static friction greater than that of the wall (6) of the track (4).

## Description

### Field of the Invention

The invention is comprised in the field of devices used for continuously supplying small pieces, particularly nuts, screws and similar pieces, in an automated article and equipment manufacturing system.

The invention applies particularly, although not exclusively, for continuously supplying to an automatic welding installation nuts, screws and similar pieces that must be welded, for example, to a body part of an automobile being manufactured.

More specifically, the invention relates to a vibratory bowl for continuously supplying small pieces stored in an unsorted manner in the bowl, said bowl being of the type having a conical wall and a bottom demarcating a concavity intended for containing the pieces arranged in an unsorted manner, a track being formed in the conical wall that extends following a conical spiral path from a point close to the bottom of the bowl to a discriminator provided in an upper area of the bowl, said track being configured for moving the pieces forward along said track towards the discriminator as a result of vibration of the bowl, and said discriminator being configured for discriminating the pieces arriving along the track according to specific shape and/or position requirements, such that upon reaching the discriminator the pieces fall by gravity towards the bottom of the bowl if the requirements are not met.

### State of the Art

In many industries for producing capital goods, such as, for example and in a non-limiting manner, in the automobile industry, automatic welding installations are used for welding small pieces such as screws, nuts and other similar pieces. These welding installations comprise robotic arms which position each piece in the location in which it must be welded and which are fed by feeder equipment supplying the pieces to be welded in the suitable position and at the desired rate. The feeder equipment typically comprises a vibratory bowl of the type indicated above, providing a succession of pieces of a specific model and in a specific position. Patent document US5913428A, for example, discloses a vibratory bowl of this type.

The applicant has designed and marketed a vibratory bowl of this type, having the particularity of being formed by a body made of a single piece of plastic material, and in which the discriminator is a replaceable element that is different from the body of the bowl. As a result of this configuration, the vibratory bowl can be adapted to a shape or size change in the pieces to be supplied by means of simply replacing the discriminator. This vibratory bowl is described in document ES2299402A1.

In vibratory bowls of the type herein considered, the upward movement of the pieces along the track, from the bottom of the bowl to the discriminator, occurs as a result of a vibratory movement of the bowl which is provided by a vibratory base on which said bowl is mounted. Under specific circumstances, depending on the type of pieces to be supplied and on other parameters, such as, the quality of the lubricant covering said pieces, for example, the percentage of pieces moving upward along the track and falling towards the bottom of the bowl without having reached the discriminator is too high. When this occurs, it is possible that for a certain period of time the discriminator does not receive pieces at a suitable rate so as to keep enough pieces in the queue at the outlet of the vibratory bowl, so the supply of the pieces may be momentarily interrupted. Although this situation is rather uncommon, it may have a significant repercussion because it can cause the equipment to which the vibratory bowl is supplying the pieces to stop or slow down.

The drawback described above is seen in vibratory bowls made of plastic material such as those described in said document ES2299402A1, particularly when the characteristics of the pieces that must be supplied through the same vibratory bowl are modified. However, the same drawback can also be seen in vibratory bowls of the state of the art prior to said document, for example, in metallic vibratory bowls specifically designed for supplying only one model of piece. In this last case, the described drawback can arise, for example, as a result of a change in the quality of the lubricant coating the pieces, or when the vibratory bowl receives an accidental blow permanently altering its shape and thereby its actual vibration characteristics.

### Description of the Invention

The purpose of the invention is to provide a vibratory bowl of the type indicated above, which allows overcoming the drawback described above.

This is achieved by means of a vibratory bowl of the type indicated above, characterized in that in at least one wall of the track, intended for being in contact with the pieces moving forward along said track, there is integrally arranged at least one anti-slip body which is different from the body making up the bowl and which extends along at least one segment of the track, said anti-slip body having a coefficient of static friction greater than that of said wall of the track. The anti-slip body provided in the track increases friction between the pieces and the track, so it reduces the percentage of pieces that fall towards the bottom of the bowl without having reached the discriminator. Furthermore, with the anti-slip body variation of this percentage with changes in the type and size of the pieces or in lubricant quality is less compared to the case of a track that lacks said anti-slip body. Another advantage of the invention is that it allows using different anti-slip bodies, particularly varying the surface finish of or the material making up the anti-slip bodies for the purpose of adjusting the coefficient of friction for different applications of one and the same bowl.

Based on the invention defined in the main claim, several preferred embodiments the features of which are described in the dependent claims have been envisaged.

The anti-slip body can have several configurations. For example, and without the following list being exhaustive, the anti-slip body can be formed by planar patches that are adhered to the wall of the track at different points thereof, or by a granular material which is embedded in said wall of the track, partially or completely covering it. However, in the preferred embodiments the anti-slip body is a body with an elongated shape extending along the segment of the track, more preferably substantially along the entire length of the track. This solution has the advantage of preventing discontinuities along the segment of the track, and furthermore makes placement of the anti-slip body easier.

This anti-slip body with an elongated shape can be made in several ways. It can, for example and in a non-exhaustive manner, consist of one or more planar tapes which are adhered to the wall of the track along said track. However, in the preferred embodiments, the anti-slip body has the shape of a cord and is introduced in a groove formed in the wall of the track along said track, such that said anti-slip body partially projects from said wall of the track. This solution makes correct positioning of the anti-slip body in the track easier, since said anti-slip body is guided by the groove. In addition, this configuration makes rotation of the pieces that are supported on the wall of the track easier, without them slipping and falling towards the bottom of the bowl, so better positioning of the pieces moving upward along the track is achieved.

The anti-slip body is preferably snap-fitted into the groove, which makes its placement easier and renders the use of glues unnecessary.

The cord-shaped anti-slip body preferably has a circular section. This shape is particularly advantageous to favor rotation of the pieces and to achieve better positioning of the pieces in the track.

The groove preferably has a dovetail-shaped cross-section, with an inlet width smaller than the cross-sectional diameter of said cord-shaped anti-slip body. This groove can be easily made by machining the bowl and it assures that the anti-slip body is securely held within said groove when the bowl is operating.

In an advantageous solution, the end of the cord-shaped anti-slip body closest to the bottom of the bowl is bent and introduced in a hole made in the wall of the track, and said hole is made in continuity with the groove. The end of the anti-slip body thereby forms a rounded bend, so it prevents said end from producing a sudden discontinuity in the track that may cause the unwanted falling of pieces.

In some embodiments that are particularly suitable when the pieces to be supplied are screws or other pieces with a similar shape, only one of said anti-slip bodies is arranged in said segment of the track.

In other embodiments that are particularly suitable when the pieces to be supplied are nuts or other pieces with a similar shape, at least two, preferably three, of said anti-slip bodies are arranged in said segment of the track parallel to one another.

Although it is possible to place the anti-slip body in a side wall of the track, the anti-slip body is preferably arranged at the bottom of the track. This arrangement is more effective for keeping the pieces on the track without hindering their upward movement along same.

In some preferred embodiments corresponding to the type of vibratory bowl described in said document ES2299402A1, the bowl is a body made of a single piece of plastic material, and the anti-slip body is preferably made of plastic material different from the plastic material of the body forming said bowl. Good friction is thereby obtained between the track and the pieces moving forward along said track, without any risk of the pieces getting damage or the lubricant layer coating them wearing away excessively.

The anti-slip body is preferably arranged integrally with the wall of the track in a removable manner. This allows easily replacing the anti-slip body with another anti-slip body having different characteristics for modifying the friction between the track and the pieces, or with another identical anti-slip body when the one installed therein has deteriorated due to wear or other causes.

The invention also comprises other detail features illustrated in the following detailed description of an embodiment of the invention and in the attached drawings.

### Brief Description of the Drawings

The advantages and features of the invention will be understood based on the following description in which several preferred embodiments of the invention are described in a non-limiting manner with respect to the scope of the main claim in reference to the attached drawings.
Figure 1 is a perspective view of a first embodiment of the vibratory bowl, which is particularly suitable for the case in which the pieces to be supplied are screws or other pieces with a similar shape.
Figure 2 is a top view of the vibratory bowl of Figure 1.
Figures 3 and 4 are, respectively, a cross-section view and a longitudinal section view of the track provided with the anti-slip body. Figure 4 shows the end of the anti-slip body closest to the bottom of the bowl.
Figures 5, 6 and 7 are views similar to Figures 1, 2 and 3, respectively, showing a second embodiment of the vibratory bowl which is particularly suitable for the case in which the pieces to be supplied are nuts or other pieces with a similar shape.

### Detailed Description of Several Embodiments of the Invention

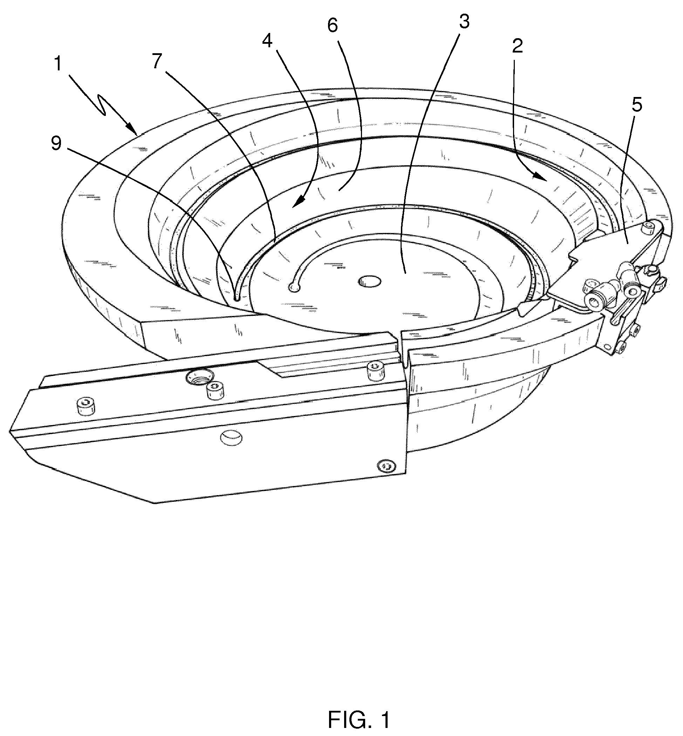

Figures 1 to 4 show by way of non-limiting example a first embodiment of the vibratory bowl 1, which is particularly suitable for the case in which the pieces to be supplied are screws or other pieces with a similar shape, and which is intended for being installed in an automobile factory assembly line in which screws are welded to vehicle body elements. Obviously, the invention also covers other embodiments for different types of small pieces to be welded and for other applications in different production lines, in which there is a need to supply pieces continuously and in a specific position.

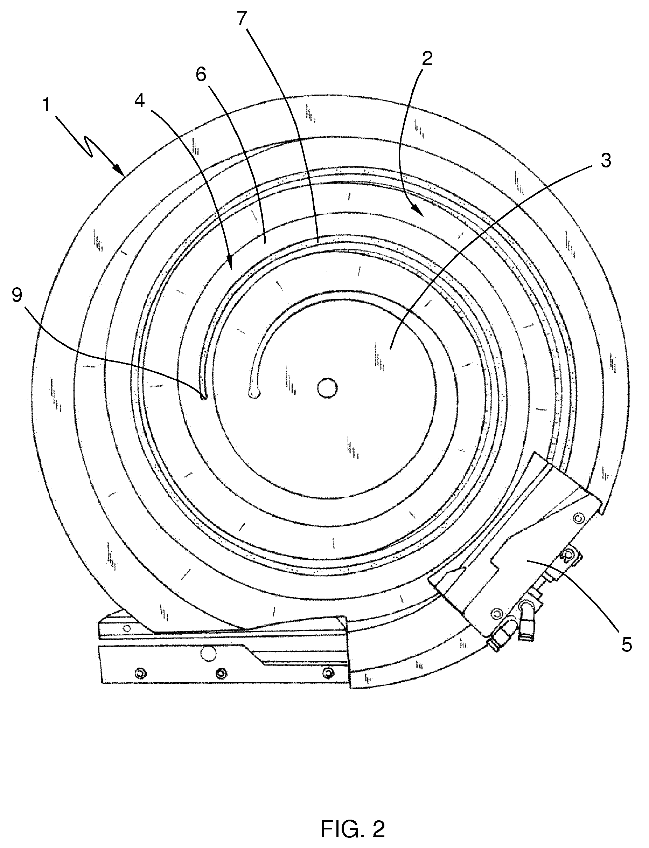

As can be seen in Figures 1 and 2, the bowl 1 forms a concavity which is intended for containing screws (not depicted) arranged in an unsorted manner and which is demarcated by a conical wall 2 and a bottom 3. A track 4 is formed in the conical wall 2 that extends following a conical spiral path, from a point close to the bottom 3 of the bowl 1 to a discriminator 5 assembled in an upper area of said bowl 1. When the bowl 1 is subjected to vibration, the screws move forward along the track 4 until reaching the discriminator 5, where they are passively discriminated according to their shape and position, such that screws which do not have the correct shape and position fall towards the bottom of the bowl 1, and screws that meet these conditions pass through the discriminator 5 and reach the outlet of the bowl 1, from where they are supplied to the assembly line in which said bowl 1 is installed. This operating principle, as well as the design of the discriminator 5, are known and are within reach of the person skilled in the art. Therefore, it is not considered necessary to describe them in further detail herein. The discriminator 5 is preferably a replaceable element different from the body of the bowl 1 of the type described in document ES2299402A1.

The body forming the bowl 1 is made of a single piece of plastic material and is manufactured by means of a precision machining process from a raw block of hardener-loaded thermoplastic. The track 4 is also made by means of a precision machining process. Alternatively, for mass production runs the body of the bowl 1 can be manufactured by means of a molding process. The selection of the thermoplastic with its hardener load does not present technical difficulties and is within reach of a person skilled in the art.

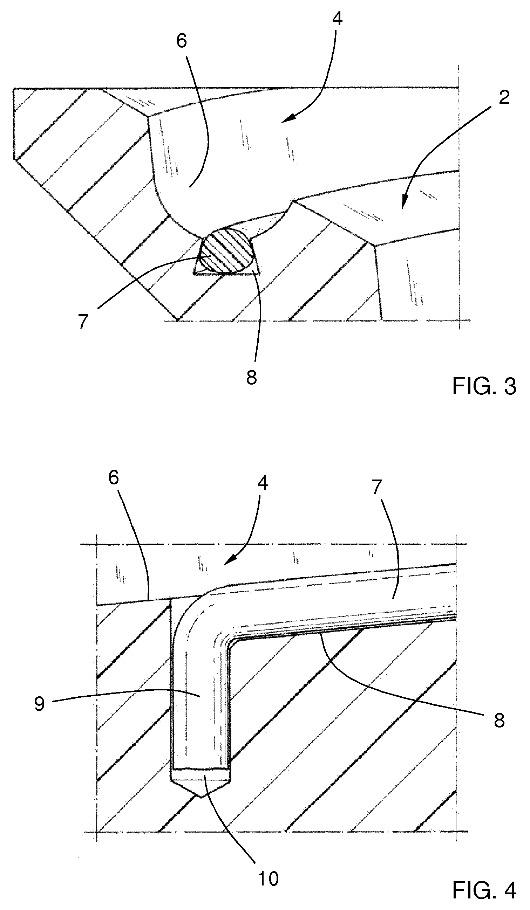

As can be seen in greater detail in Figure 3, the track 4 has a rounded channel shape at the bottom, and a groove 8 having a dovetail-shaped cross-section is machined in the wall 6 of said track 4 that is intended for being in contact with the screws moving forward along said track. The groove 8 is arranged at the bottom of the track 4 and preferably extends substantially along the entire length thereof, from a point close to the bottom 3 of the track 4 to the discriminator 5. In this groove 8, and along the entire length thereof, there is snap-fitted an anti-slip body 7 which is made up of an elongated cord-shaped body having a circular section and a larger diameter than the inlet width of said groove 8. When introduced in the groove 8, the anti-slip body 7 partially projects from same, so it partially projects from the wall 6 of the track 4, as can be seen in Figure 3. The cord-shaped anti-slip body 7 extends along the entire length of the groove 8, and therefore extends substantially along the entire length of the track 4. As shown in Figure 4, at the lower end of the groove 8, i.e., the end closest to the bottom 3 of the track 4, a hole 10 is made in continuity with said groove 8, in which the bent lower end 9 of the cord-shaped anti-slip body 7 is introduced. In this first embodiment, the track 4 has only one groove 8 and only one cord-shaped anti-slip body 7 introduced therein.

The cord-shaped anti-slip body 7 is introduced by pressure in the groove 8, thereby being arranged integrally with the wall 6 of the track 4 in a removable manner. In order to remove it, it must be pulled with enough force from its upper end, i.e., from the end opposite the end 9, in order to progressively take said anti-slip body 7 out of the groove 8.

The material making up the cord-shaped anti-slip body 7 is a plastic material different from the plastic material making up the bowl 1, and it is selected such that it has a coefficient of static friction greater than that of the wall 6 of the track 4. For example, this material making up the anti-slip body 7 is a fiber-loaded thermoplastic. Optionally, the surface of the anti-slip body 7 can be provided with a surface finish for obtaining high roughness.

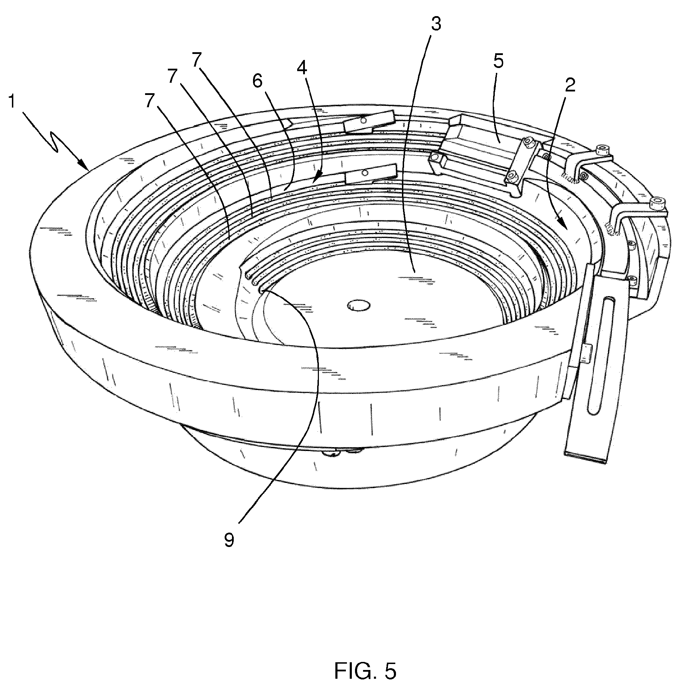

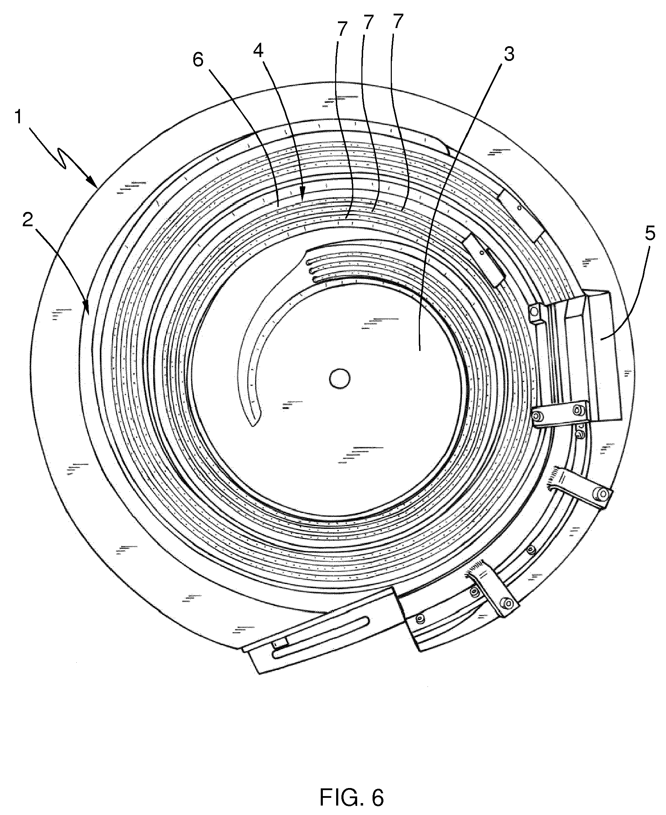

Figures 5 to 7 show by way of non-limiting example a second embodiment of the vibratory bowl 1, which is particularly suitable for the case in which the pieces to be supplied are nuts or other pieces with a similar shape, and which is also intended for being installed in an automobile factory assembly line in which nuts are welded to vehicle body elements. This second embodiment of the bowl 1 only differs from the first embodiment in the aspects described below, the rest being the same as the first embodiment. The same references used in Figures 1 to 4 are used in Figures 5 to 7 for designating elements which, although they may have a different shape, are functionally analogous to the elements of the first embodiment. For example, the discriminator 5 has a different shape adapted to the shape of the nuts, but it performs the same function of making pieces (in this case, nuts), which reach the discriminator along the track 4 and do not meet shape and position requirements, fall towards the bottom 3 of the bowl 1.

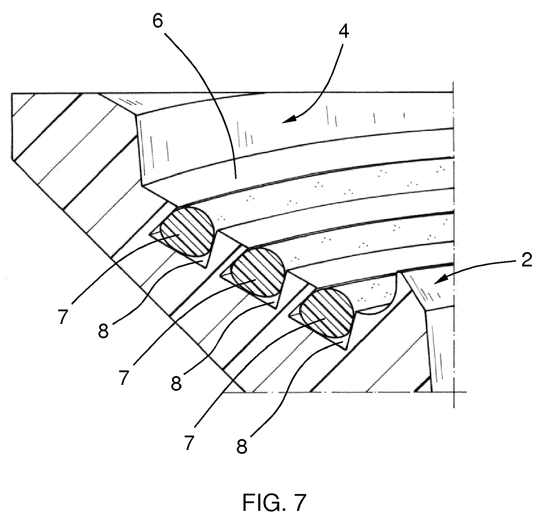

As can be seen in greater detail in Figure 7, in this case the track 4 has a planar bottom, and three parallel grooves 8 are machined in the wall 6 of said track 4, intended for being in contact with the nuts moving forward along said track 4. The three grooves 8 are arranged at the planar bottom of the track 4 and preferably extend substantially along the entire length of same, from a point close to the bottom of the track 4 to the discriminator 5. A cord-shaped anti-slip body 7 is snap-fitted into each of these grooves 8, along the entire length thereof, such that the track 4 is thereby provided with three parallel anti-slip bodies 7. The shape of each groove 8 is the same as in the first embodiment described in Figures 1 to 4. Likewise, the cord-shaped anti-slip body 7 introduced in each groove 8 has the same shape and the shape constitution as in the first embodiment. The snap-fitting of each cord-shaped anti-slip body 7 into the corresponding groove 8, as well as the final arrangement of each anti-slip body 7 in each groove 8, which also partially projects from the wall 6 of the track 4, are also the same. Like in the first embodiment, according to Figure 4, a hole 10 is made at the lower end of each of the three grooves 8 in continuity with said groove 8, in which the bent lower end 9 of each cord-shaped anti-slip body 7 is introduced.

## Claims

1. A vibratory bowl (1) for continuously supplying small pieces stored in an unsorted manner in said bowl (1), said bowl (1) having a conical wall (2) and a bottom (3) demarcating a concavity intended for containing the pieces arranged in an unsorted manner, a track (4) being formed in said conical wall (2) that extends following a conical spiral path from a point close to said bottom (3) of the bowl (1) to a discriminator (5) provided in an upper area of said bowl (1), said track (4) being configured for moving the pieces forward along said track towards said discriminator (5) as a result of vibration of said bowl (1), and said discriminator (5) being configured for discriminating said pieces arriving along said track (4) according to specific shape and/or position requirements, such that upon reaching said discriminator (5) said pieces fall by gravity towards said bottom (3) of the bowl (1) if said requirements are not met, **characterized in that** in at least one wall (6) of said track (4), intended for being in contact with said pieces moving forward along said track (4), there is integrally arranged at least one anti-slip body (7) which is different from the body making up said bowl (1) and extends along at least one segment of said track (4), said anti-slip body (7) having a coefficient of static friction greater than that of said wall (6) of the track (4).

2. The vibratory bowl (1) according to claim 1, **characterized in that** said anti-slip body (7) is a body with an elongated shape extending along said segment of the track (4).

3. The vibratory bowl (1) according to claim 2, **characterized in that** said anti-slip body (7) is a body with an elongated shape extending substantially along the entire length of said track (4).

4. The vibratory bowl (1) according to claim 2 or 3, **characterized in that** said anti-slip body (7) has the shape of a cord and is introduced in a groove (8) formed in said wall (6) along said track (4), such that said anti-slip body (7) partially projects from said wall (6) of the track (4).

5. The vibratory bowl (1) according to claim 4, **characterized in that** said anti-slip body (7) is snap-fitted into said groove (8).

6. The vibratory bowl (1) according to claim 5, **characterized in that** said cord-shaped anti-slip body (7) has a circular section.

7. The vibratory bowl (1) according to claim 6, **characterized in that** said groove (8) has a dovetail-shaped cross-section, with an inlet width smaller than the cross-sectional diameter of said cord-shaped anti-slip body (7).

8. The vibratory bowl (1) according to any of claims 5 to 7, **characterized in that** the end (9) of said cord-shaped anti-slip body (7) closest to said bottom (3) of the bowl (1) is bent and introduced in a hole (10) made in said wall (6) of the track (4), said hole (10) being made in continuity with said groove (8).

9. The vibratory bowl (1) according to any of claims 2 to 8, **characterized in that** only one of said anti-slip bodies (7) is arranged in said segment of the track (4).

10. The vibratory bowl (1) according to any of claims 2 to 8, **characterized in that** at least two, preferably three, of said anti-slip bodies (7) are arranged in said segment of the track (4) parallel to one another.

11. The vibratory bowl (1) according to any of claims 1 to 10, **characterized in that** said anti-slip body (7) is arranged at the bottom of said track (4).

12. The vibratory bowl (1) according to any of claims 1 to 11, **characterized in that** said bowl (1) is a body made of a single piece of plastic material.

13. The vibratory bowl (1) according to claim 12, **characterized in that** said anti-slip body (7) is made of plastic material different from the plastic material of the body forming said bowl (1).

14. The vibratory bowl (1) according to any of claims 1 to 13, **characterized in that** said anti-slip body (7) is integrally arranged with said wall (6) of the track (4) in a removable manner.
